# EUROPÄISCHE PATENTANMELDUNG

(11) **EP 4 538 021 A1**
(43) Veröffentlichungstag der Anmeldung: **16.04.2025**
(21) Anmeldenummer: 24204332.1
(22) Anmeldetag: 02.10.2024
(51) Int. Cl.: B29C 64/118, B29C 48/92, B29C 64/343, B29C 64/393, B33Y 10/00, B33Y 30/00, B33Y 50/02

(54) **EXTRUSIONSEINRICHTUNG UND VERFAHREN ZUM HERSTELLEN VON DREIDIMENSIONALEN STRUKTUREN**

(30) Priorität: 10.10.2023 DE 102023127672
(71) Anmelder: Deutsches Zentrum für Luft- und Raumfahrt e.V., 53227 Bonn-Oberkassel (DE)
(72) Erfinder: Titze, Maik, 32457 Porta Westfalica (DE); Johannsen, Erik, 38442 Wolfsburg (DE); Schmidt, Jan-Uwe Reinhard, 38106 Braunschweig (DE)
(74) Vertreter: Gramm, Lins & Partner Patent- und Rechtsanwälte PartGmbB

(57) **Zusammenfassung**

Eine Extrusionseinrichtung zum Herstellen von dreidimensionalen Strukturen aus mindestens einem druckfähigen Material mit einer Extrusionsschnecke zum Fördern des mindestens einen druckfähigen Materials von einer Materialzuführung hin zu einer Austragsdüse zum Ausgeben des mindestens einen druckfähigen Materials, einem Motor zum drehbaren Antreiben der Extrusionsschnecke sowie einer Steuereinheit, die zum Steuern der Drehung der Extrusionsschnecke durch Ansteuerung des Motors eingerichtet ist, wobei die Steuereinheit eine lokale Austragscharakteristik enthält, die ein Austragsvolumen des druckfähigen Materials aus der Austragsdüse in Abhängigkeit von einem Drehwinkel der Extrusionsschnecke und/oder einem Vielfachen davon definiert, wobei die Extrusionseinrichtung einen Drehgeber zum Erfassen einer Drehwinkelinformation der Extrusionsschnecke hat und die Steuereinheit ferner eingerichtet ist, den gewünschten Materialaustrag aus der Austragsdüse durch Ansteuerung des Motors zur Steuerung der Drehung der Extrusionsschnecke in Abhängigkeit von dem aus der lokalen Austragscharakteristik für die erfasste Drehwinkelinformation definierten Austragsvolumen einzustellen.

## Beschreibung

Die Erfindung betrifft eine Extrusionseinrichtung zum Herstellen von dreidimensionalen Strukturen aus mindestens einem druckfähigen Material mit einer Extrusionsschnecke zum Fördern des mindestens einen druckfähigen Materials von einer Materialzuführung hin zu einer Austragsdüse zum Ausgeben des mindestens einen druckfähigen Materials, einem Motor zum drehbaren Antreiben der Extrusionsschnecke sowie einer Steuereinheit, die zum Steuern der Drehung der Extrusionsschnecke durch Ansteuerung des Motors eingerichtet ist.

Die Erfindung betrifft ebenso ein Verfahren zum Herstellen einer dreidimensionalen Struktur aus mindestens einem druckfähigen Material mittels einer Extrusionseinrichtung, wobei ein Motor zur Steuerung der Drehung einer Extrusionsschnecke der Extrusionseinrichtung angesteuert wird, um das druckfähige Material von einer Materialzuführung hin zu einer Austragsdüse zum Ausgeben des druckfähigen Materials zu fördern.

Mithilfe von generativen Verfahren lassen sich unter Verwendung eines entsprechenden Werkstoffes Bauteile mit einer fast beliebigen Geometrie herstellen. Der 3D-Druck mithilfe eines 3D-Druckers stellt dabei einen sehr bekannten Vertreter der generativen Fertigungsverfahren dar. Dabei wird mithilfe eines 3D-Druckers schichtweise ein schmelzbarer Werkstoff, beispielsweise ein thermoplastischer Kunststoff, gedruckt, wodurch sich am Ende des Verfahrens ein dreidimensionales Bauteil bzw. eine dreidimensionale Struktur ergibt.

Aus der DE 20 2015 004 336 U1 ist eine Vorrichtung zum Auftragen eines Werkstoffes bekannt, der aus einer Mischung zweier einem Druckkopf zugeführten Materialien hergestellt wird.

Diese Form der additiven Fertigung findet immer stärkeren Einzug in industrielle Fertigungsumgebungen. Zu den etablierten Verfahren zählt dabei u.a. die Materialextrusion. Hierbei wird ein (thermoplastisches) Material (bspw. ein Kunststoffmaterial) einem Extrusionsaggregat bzw. einem Extruder zugeführt, aufgeschmolzen und auf ein Substrat aufgetragen, wo das schmelzflüssige, druckfähige Material wieder erstarrt. Das Extrusionsaggregat und/oder Substrat wird hierbei relativ zueinander im Raum bewegt, so dass durch den räumlichen Materialaustrag sukzessive eine dreidimensionale Struktur entsteht. Die Fertigung mit (granulatbasierten) Extrusionsaggregaten basiert derzeit vornehmlich auf Schneckenextrudern, meist in Form von Einschneckensystemen.

Diese Extrusionsaggregate werden häufig an eine Kinematik montiert und im Raum bewegt und/oder der Drucktisch wird unter dem Extruder bewegt. Somit entsteht eine relative Geschwindigkeit von der Austragsdüse des Extruders gegenüber der zu druckenden Struktur. Um die Struktur möglichst konturgetreu drucken zu können, muss zu jeder Zeit die zuvor bestimmte Menge an Material mit der gewünschten Geometrie extrudiert werden. Dies ist insbesondere bei Einschneckenextrudern sehr herausfordernd.

Die Kontrolle des Volumenaustrags erfolgt dabei vornehmlich über die Regelung der Schneckendrehzahl, da der reale Volumenaustrag nicht direkt physikalisch erfassbar und steuerbar ist. Im globalen Mittel kann hierdurch zwar ein verhältnismäßig konstanter Materialaustrag erreicht werden. Auf einer kürzeren Zeitskala betrachtet sind jedoch teils erhebliche Pulsationen sichtbar.

Da beim 3D-Druck über einen langen Zeitraum extrudierte Stränge aufeinandergeschichtet werden, um ein Bauteil zu erzeugen, ist es äußerst wünschenswert, wenn das Austragsverhalten und damit der Volumenstrang konstant gehalten werden kann. Wenn das Austragsverhalten nicht genau kontrolliert werden kann, weisen diese Stränge Geometrieabweichungen auf, so dass das gefertigte Bauteil Fehlstellen wie Porositäten enthält oder von der gewünschten Geometriekontur abweicht.

Es ist daher Aufgabe der vorliegenden Erfindung ein verbessertes Verfahren und einen verbesserten Extruder anzugeben, mit dem das Austragsverhalten sehr genau kontrolliert werden kann und Geometrieabweichungen reduziert werden können.

Die Aufgabe wird mit der Extrusionseinrichtung gemäß Anspruch 1 sowie dem Verfahren gemäß Anspruch 7 erfindungsgemäß gelöst. Vorteilhafte Ausgestaltungen finden sich dann in den entsprechenden Unteransprüchen.

Gemäß Anspruch 1 wird eine Extrusionseinrichtung zum Herstellen von dreidimensionalen Strukturen aus mindestens einem druckfähigen Material, beispielsweise einem thermoplastischen Material, vorgeschlagen wobei die Extrusionseinrichtung gattungsgemäß eine Extrusionsschnecke zum Ausbringen des druckfähigen Materials aufweist. Hierzu wird der Extrusionseinrichtung über eine Materialzuführung das druckfähige Material zugeführt. Dies kann beispielsweise in Form eines Granulates erfolgen, das der Extrusionsschnecke zugeführt, dort mithilfe einer Temperiereinrichtung temperiert und durch die entstehende Scherwärme in eine Schmelze überführt wird. Denkbar ist aber auch, dass der Extrusionseinrichtung bereits ein aufgeschmolzenes, druckfähiges Material zugeführt wird, was dann der Extrusionsschnecke bereitgestellt wird.

Die Extrusionsschnecke wird durch einen Motor drehbar angetrieben. Die Steuerung des Motors erfolgt mithilfe einer Steuereinheit, die den Motor zur Steuerung der Drehung ansteuert. Die Drehung der Extrusionsschnecke hat dabei direkten Einfluss auf das Austragsvolumen und stellt somit eine relevante Steuerungsgröße dar. Dabei wird durch die Ansteuerung des Motors insbesondere eine Drehgeschwindigkeit, eine zeitabhängige Drehwinkellage, Drehwinkelposition, Drehwinkelgeschwindigkeit oder Winkelbeschleunigung eingestellt. So wird bspw. ausgehend von einem aktuellen ersten Zeitpunkt für einen zukünftigen zweiten Zeitpunkt eine Drehwinkellage oder Drehwinkelposition der Extrusionsschnecke berechnet, die dann zum zweiten Zeitpunkt eingehalten werden muss. Der zeitliche Abstand zwischen dem ersten Zeitpunkt und dem zweiten Zeitpunkt kann bspw. zwischen 5 und 20 ms betragen, vorzugsweise zwischen 7 und 9 ms. Dies kann zw. dem ersten Zeitpunkt und dem zweiten Zeitpunkt zu einer konstanten Drehgeschwindigkeit oder zu einer Drehbeschleunigung führen, die positiv oder auch negativ sein kann.

Die Extrusionsschnecke fördert nun das aufgeschmolzene, druckfähige Material in Richtung einer Austragsdüse, um das aufgeschmolzene, druckfähige Material zur Bildung der dreidimensionalen Struktur auszubringen.

Eine solche Extrusionseinrichtung kann dabei innerhalb eines 3D-Druckkopfes angeordnet sein, der beispielsweise als Endeffektor an einer Bewegungskinematik angeordnet ist. Die Bewegungskinematik bewegt dabei den Druckkopf relativ gegenüber einem Bauraum, innerhalb dessen die 3-dimensionale Struktur durch den Druckkopf erstellt werden soll. Denkbar ist aber auch, dass die Extrusionseinrichtung feststehend ist und die Bewegungskinematik den Bauraum gegenüber der Extrusionseinrichtung relativ bewegt, sodass eine Relativbewegung realisiert wird, um die 3-dimensionale Struktur durch den Materialaustrag zu erstellen. Die Relativbewegung wird auch Druckbewegung oder Druckgeschwindigkeit genannt.

Erfindungsgemäß ist nun vorgesehen, dass die Steuereinheit eine lokale Austragscharakteristik enthält, die ein Austragsvolumen des druckfähigen Materials aus der Austragsdüse in Abhängigkeit von einem Drehwinkel der Extrusionsschnecke und/oder einem Vielfachen davon definiert, wobei die Extrusionseinrichtung einen Drehgeber zum Erfassen einer Drehwinkelinformation der Extrusionsschnecke hat und die Steuereinheit ferner eingerichtet ist, den gewünschten Materialaustrag aus der Austragsdüse durch Ansteuerung des Motors zur Steuerung der Drehung der Extrusionsschnecke in Abhängigkeit von dem aus der lokalen Austragscharakteristik für die erfasste Drehwinkelinformation definierten Austragsvolumen einzustellen. Mit anderen Worten, die Steuereinheit ist eingerichtet, die Drehung der Extrusionsschnecke basierend auf der lokalen Austragscharakteristik innerhalb einer Umdrehung zu variieren, um einen konstanten Materialaustrag zu gewährleisten. Dies kann bspw. dazu führen, dass die Drehgeschwindigkeit in einem betrachteten Zeitfenster innerhalb einer Umdrehung konstant bleibt oder variiert, indem die Drehung innerhalb des betrachteten Zeitfensters eine Drehbeschleunigung (positiv oder negativ) erfährt.

Die lokale Austragscharakteristik definiert dabei das Austragsvolumen des druckfähigen Materials in Abhängigkeit von dem Drehwinkel der Extrusionsschnecke und/oder einem Vielfachen davon. Dabei kann das Austragsvolumen auch zeitabhängig definiert sein, d. h. Volumen pro Zeit, wobei dann in der lokalen Austragscharakteristik weiterhin eine Drehgeschwindigkeit der Extrusionsschnecke definiert ist, sodass dann die lokale Austragscharakteristik das Austragsvolumen für verschiedene Drehgeschwindigkeiten und Drehwinkel der Extrusionsschnecke definiert. Auch ist es denkbar, dass die Druckgeschwindigkeit hierbei berücksichtigt wird.

Unter einer lokalen Austragscharakteristik wird insbesondere verstanden, dass die Abhängigkeit von Austragsvolumen zu Drehwinkel und gegebenenfalls Drehgeschwindigkeit und/oder Druckgeschwindigkeit für nur eine sehr kurze Zeit berücksichtigt wird, d. h. vorzugsweise für weniger als 20 Umdrehungen der Extrusionsschnecke, vorzugsweise weniger als 10 Umdrehungen.

Basierend auf dieser lokalen Austragscharakteristik der Extrusionsschnecke wird nun für einen gewissen Drehwinkel das Austragsvolumen aus der lokalen Austragscharakteristik ermittelt und dann die Drehung (bspw. die Drehgeschwindigkeit und/oder die Drehbeschleunigung) der Extrusionsschnecke so eingestellt, dass der gewünschte Materialaustrag erfolgt.

Soll dabei ein konstanter Materialaustrag mit einem vorgegebenen Austragsvolumen eingestellt werden (bspw. für eine konstante Druckgeschwindigkeit), so wird die Drehgeschwindigkeit der Extrusionsschnecke während 1 Umdrehung (leicht) variiert, um den Schwankungen im Materialaustrag vorzubeugen und so einen konstanten Materialaustrag sicherzustellen. Dabei kann die Drehgeschwindigkeit konstant bleiben oder leicht beschleunigt bzw. verzögert werden. Dabei wird das von der Austragscharakteristik abgeleitete Austragsvolumen mit den gewünschten Materialaustrag verglichen, wobei die jeweils bestehende Abweichung als Regelgröße für die Einstellung bzw. Validierung der Umdrehungsgeschwindigkeit der Extrusionsschnecke verwendet wird.

Hierdurch wird es möglich, die Umdrehungsgeschwindigkeit der Extrusionsschnecke während 1 Umdrehung oder einem Vielfachen davon so zu variieren, dass ein weitgehend konstanter Materialaustrag (innerhalb gewisser Toleranzen) möglich wird. Die häufig in einem lokalen Kontext (einige wenige Umdrehungen der Extrusionsschnecke) auftretenden Pulsationen im Materialaustrag können so deutlich reduziert und gegebenenfalls gänzlich vermieden werden.

Dadurch kann erreicht werden, dass in einem additiven bzw. generativen Fertigungsverfahren Bauteile gedruckt werden können, die hinsichtlich der Geometrie eine besonders hohe Güte aufweisen, wodurch Fehlstellen, Fehlbauteile und Ausschuss verringert werden können.

Die lokale Austragscharakteristik dient dabei insbesondere zur Kompensation von Schwankungen des Materialaustrags bei einer weitestgehend konstanten Drehgeschwindigkeit der Extrusionsschnecke bzw. bei einer weitestgehend konstanten Druckgeschwindigkeit. Bei der vorliegenden Erfindung würde diese konstante Drehgeschwindigkeit für jede Umdrehung leicht variiert, sodass sich innerhalb einer Umdrehung der Extrusionsschnecke die Drehgeschwindigkeit verändert.

Gemäß einer Ausführungsform ist vorgesehen, dass die Steuereinheit eine globale Austragscharakteristik enthält, die ein Austragsvolumen des druckfähigen Materials aus der Austragsdüse unabhängig von dem Drehwinkel der Extrusionsschnecke gemittelt über einen gewissen Austragszeitraum definiert, wobei die Steuereinheit ferner eingerichtet ist, den gewünschten Materialaustrag aus der Austragsdüse durch Ansteuerung des Motors zur Steuerung der Drehung der Extrusionsschnecke zusätzlich auch in Abhängigkeit von der globalen Austragscharakteristik einzustellen.

Bei dieser Ausführungsform wird zusätzlich zu der lokalen Austragscharakteristik auch eine globale Austragscharakteristik berücksichtigt, die ein von dem Drehwinkel unabhängiges Austragsvolumen definiert und im Ergebnis im Wesentlichen abhängig ist von der Umdrehungsgeschwindigkeit der Extrusionsschnecke. Dabei werden die lokale Austragscharakteristik und die globale Austragscharakteristik überlagert, um so die Drehung der Extrusionsschnecke zu steuern und somit den gewünschten Materialaustrag einzustellen.

Gemäß einer Ausführungsform ist vorgesehen, dass die Steuereinheit eine dynamische Austragscharakteristik enthält, die ein Austragsvolumen des druckfähigen Materials aus der Austragsdüse in Abhängigkeit von einer Drehbeschleunigung der Extruderschnecke definiert, wobei die Steuereinheit ferner eingerichtet ist, den gewünschten Materialaustrag aus der Austragsdüse durch Ansteuerung des Motors zur Steuerung der Drehung der Extrusionsschnecke zusätzlich auch in Abhängigkeit von der dynamischen Austragscharakteristik einzustellen. Die dynamische Austragscharakteristik ist dabei insbesondere von der Beschleunigung sowie dem Start- und Endpunkt zwischen den Beschleunigungspunkten abhängig.

Bei dieser Ausführungsform wird zusätzlich zu der lokalen Austragscharakteristik und gegebenenfalls zusätzlich zu der globalen Austragscharakteristik eine dynamische Austragscharakteristik berücksichtigt, wenn durch eine Drehgeschwindigkeitsänderung der Extrusionsschnecke der Materialaustrag verlangsamt oder beschleunigt werden soll, beispielsweise wenn die Relativbewegung zwischen der Extrusionseinrichtung und dem Bauraum verlangsamt oder beschleunigt wird. Dieses oftmals dann der Fall, wenn der geradlinige Materialaustrag in einen gebogenen Materialaustrag (beispielsweise an einer Ecke im 90° oder 180° Winkel) kurzzeitig geändert wird. Durch die Verlangsamung der zurückgelegten Wegstrecke bei der Relativbewegung muss auch der Materialaustrag reduziert werden, da ansonsten bei gleichbleibendem Materialaustrag, aber einer veränderten relativen Bewegungsgeschwindigkeit zu viel Material pro Zeit ausgegeben werden würde. Durch die Reduzierung der Drehgeschwindigkeit der Extrusionsschnecke wird dem Rechnung getragen, weil nun der Materialaustrag pro Zeit reduziert wird. Um im Ergebnis dennoch eine konstanten Materialaustrag zu gewährleisten, wird bei der dynamischen Austragscharakteristik eine Drehgeschwindigkeitsänderung der Extrusionsschnecke für das jeweilige Austragsvolumen und gegebenenfalls die Drehgeschwindigkeit definiert, sodass auch dynamische Veränderungen in der relativen Bewegungsgeschwindigkeit im Sinne der vorliegenden Erfindung berücksichtigt werden können. Hierfür wird bspw. ein Startpunkt und ein Endpunkt definiert, innerhalb dessen die Extrusionsschnecke eine Drehgeschwindigkeitsänderung von einer ersten Drehgeschwindigkeit am Startpunkt hin zu einer zweiten Drehgeschwindigkeit am Endpunkt vollführen soll. Aus der dynamischen Austragscharakteristik kann sich nun für den Startpunkt zum Endpunkt die notwendige Drehgeschwindigkeitsänderung, insbesondere für verschiedene Drehwinkel und/oder Zeitfenster (bspw. 8 ms) ableiten lassen.

Es hat sich gezeigt, dass hierdurch auch bei Änderungen der relativen Bewegungsgeschwindigkeit ein konstanter Materialaustrag realisiert werden kann.

Die lokale Austragscharakteristik allein oder i.V.m. der globalen Austragscharakteristik und/oder der dynamischen Austragscharakteristik führen zu einer Art Vorsteuerung der Drehung der Extrusionsschnecke, sodass charakteristische Schwankungen innerhalb des Materialaustrags kompensiert werden können, sodass diese erst gar nicht auftreten oder zumindest reduziert werden.

Gemäß einer Ausführungsform ist vorgesehen, dass die jeweilige Austragscharakteristik das entsprechende Austragsvolumen mittels einer polynominalen und/oder tabellarischen Beschreibung definiert.

Gemäß einer Ausführungsform ist vorgesehen, dass ein Drucksensor zum Erfassen einer Materialdruckinformation nach der Extrusionsschnecke angeordnet und mit der Steuereinheit verbunden ist, wobei die Steuereinheit weiterhin eingerichtet ist, den gewünschten Materialaustrag aus der Austragsdüse durch Ansteuerung des Motors zur Steuerung der Drehung der Extrusionsschnecke zusätzlich auch in Abhängigkeit von der erfassten Materialdruckinformation einzustellen.

Bei dieser Ausführungsform wird zusätzlich zu der durch die Austragscharakteristik definierten vor Steuerung eine Regelung vorgesehen, welche die Drehung der Extrusionsschnecke zusätzlich in Abhängigkeit eines erfassten Materialdrucks gemessen nach der Extrusionsschnecke variiert. Diese Regelung wird dabei in Verbindung mit der Steuerung basierend auf der Austragscharakteristik verwendet, sodass auch nicht durch die Charakteristik erfassbare bzw. definierbare Schwankungen verringert werden können.

Gemäß einer Ausführungsform hierzu ist vorgesehen, dass die Steuereinheit zur Steuerung der Drehung in Abhängigkeit von der erfassten Materialdruckinformation mittels eines P-Reglers, eines PI-Reglers oder eines Reglers mit adaptiven Filtergewichten höherer Ordnung eingerichtet ist.

Gemäß einem weiteren Aspekt der Erfindung wird ein Verfahren zum Herstellen einer dreidimensionalen Struktur aus mindestens einem druckfähigen Material mittels einer Extrusionseinrichtung vorgeschlagen, wobei das Verfahren die folgenden Schritte umfasst:
- Ansteuern eines Motors zur Steuerung der Drehung einer Extrusionsschnecke der Extrusionseinrichtung, um das druckfähige Material von einer Materialzuführung hin zu einer Austragsdüse zum Ausgeben des druckfähigen Materials zu fördern.

Das erfindungsgemäße Verfahren ist gekennzeichnet durch
- Bereitstellen einer lokalen Austragscharakteristik, die ein Austragsvolumen des druckfähigen Materials aus der Austragsdüse in Abhängigkeit von einem Drehwinkel der Extrusionsschnecke und/oder einem Vielfachen davon definiert,
- Erfassen einer Drehwinkelinformation der Extrusionsschnecke mittels eines Drehgebers, und
- Einstellen des gewünschten Materialaustrags aus der Austragsdüse durch Ansteuerung des Motors zur Steuerung der Drehung der Extrusionsschnecke in Abhängigkeit von dem aus der lokalen Austragscharakteristik für die erfasste Drehwinkelinformation definierten Austragsvolumen mittels der Steuereinheit.

Gemäß einer Ausführungsform ist vorgesehen, dass eine globale Austragscharakteristik bereitgestellt wird, die ein Austragsvolumen des druckfähigen Materials aus der Austragsdüse unabhängig von dem Drehwinkel der Extrusionsschnecke gemittelt über einen gewissen Austragszeitraum definiert, wobei der gewünschte Materialaustrag aus der Austragsdüse durch Ansteuerung des Motors zur Steuerung der Drehung der Extrusionsschnecke zusätzlich auch in Abhängigkeit von der globalen Austragscharakteristik mittels der Steuereinheit eingestellt wird.

Gemäß einer Ausführungsform ist vorgesehen, dass eine dynamische Austragscharakteristik bereitgestellt wird, die ein Austragsvolumen des druckfähigen Materials aus der Austragsdüse in Abhängigkeit von einer Drehbeschleunigung der Extruderschnecke definiert, wobei der gewünschte Materialaustrag aus der Austragsdüse durch Ansteuerung des Motors zur Steuerung der Drehung der Extrusionsschnecke zusätzlich auch in Abhängigkeit von der dynamischen Austragscharakteristik eingestellt wird.

Gemäß einer Ausführungsform ist vorgesehen, dass die jeweilige Austragscharakteristik derart bereitgestellt wird, dass die die jeweilige Austragscharakteristik das entsprechende Austragsvolumen mittels einer polynominalen und/oder tabellarischen Beschreibung definiert.

Gemäß einer Ausführungsform ist vorgesehen, dass mittels eines Drucksensors nach der Extrusionsschnecke eine Materialdruckinformation des druckfähigen Materials erfasst wird, wobei der gewünschte Materialaustrag aus der Austragsdüse des Motors zur Steuerung der Drehung der Extrusionsschnecke zusätzlich auch in Abhängigkeit von der erfassten Materialdruckinformation mittels der Steuereinheit eingestellt wird.

Gemäß einer Ausführungsform ist vorgesehen, dass die Steuerung der Drehgeschwindigkeit in Abhängigkeit von der erfassten Materialdruckinformation mittels eines P-Reglers, eines PI-Reglers oder eines Reglers mit adaptiven Filtergewichten höherer Ordnung erfolgt.

Dabei ist es sowohl für das Verfahren als auch für die Extrusionseinrichtung denkbar, dass die Austragscharakteristik während des Druckvorgangs überwacht und gegebenenfalls neu rekalibirert wird. Diese Rekalibrierung der Austragscharakteristik kann entweder über eine erneute Vermessung bei gleich bleibenden Prozessrandbedingungen erfolgen oder über ein maschinelles Lernen während des Druckens.

Es ist des Weiteren ebenfalls sowohl für das Verfahren als auch für die Extrusionseinrichtung denkbar, dass basierend auf der bekannten Austragscharakteristik die Druckgeschwindigkeit, d. h. die Relativbewegung zwischen der Austragsdüse und dem Bauraum, variiert wird. Dabei wird aktiv die Druckgeschwindigkeit beeinflusst, insbesondere eine Beeinflussung auf die zeitabhängige Position, Geschwindigkeit und/oder Beschleunigung der Kinematik bzw. des Tool-Center-Points, welche eine Relativbewegung zwischen Extrusionseinrichtung und Ablagerung des Materials herbeiführt. Auch dadurch wird es möglich, eine einen Wesentlichen konstanten bzw. gegenüber dem Stand der Technik konstanteren Materialaustrag zu gewährleisten.

Schließlich ist es ebenfalls denkbar sowohl für das Verfahren als auch für die Extrusionseinrichtung, dass die Zuführung des druckfähigen Materials, insbesondere des Kunststoffgranulats für die Befüllung der Extrusionsschnecke geregelt wird, zur aktiven Beeinflussung des Austragsverhaltens in Form einer drehmomentgesteuerten und/oder volumetrisch gesteuerten Einrichtung.

Die Erfindung wird anhand der beigefügten Figuren beispielhaften erläutert. Es zeigen:
- Figur 1: Aufbau einer erfindungsgemäßen Extrusionseinrichtung;
- Figur 2: Amplituden bei n-fachen der Drehfrequenz bzw. 1/n-fachen Drehfrequenz;
- Figur 3: Verläufe von Druck, Moment, Austragsfläche über dem Schneckendrehwinkel;
- Figur 4: Vergleich zwischen Druckregelung und Drehzahlregelung.

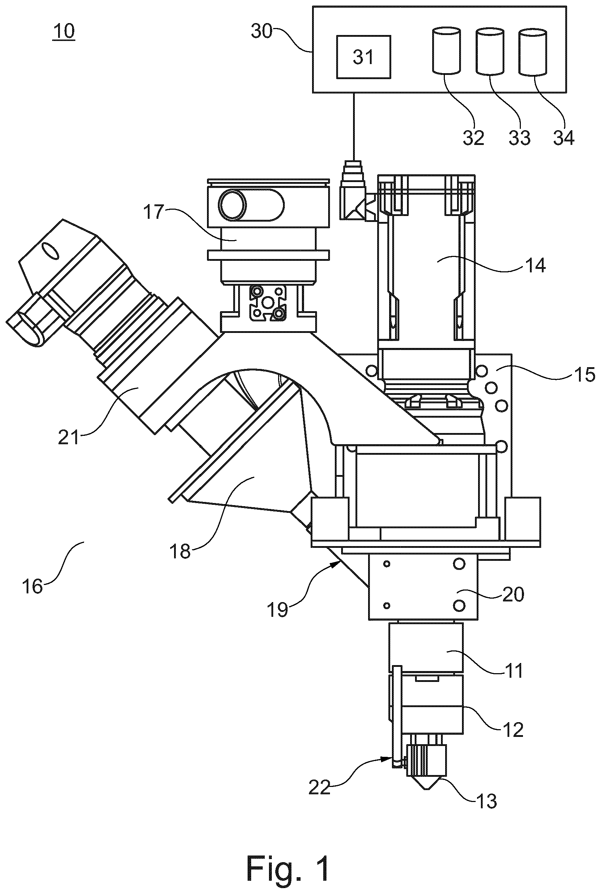

Figur 1 zeigt den Aufbau der erfindungsgemäßen Extrusionseinrichtung 10. Die Extrusionseinrichtung 10 hat eine in einem Extruderzylinder 11 Integrierte Extrusionsschnecke 12, an die sich in Materialflussrichtung einer Austragsdüse 13 anschließt. Die in dem Extruderzylinder 11 eingebauter Extrusionsschnecke 12 steht dabei mit einem Motor 14 in Wirkverbindung, der die Extrusionsschnecke 12 drehbar antreibt. Das alles ist an einer Anbindungsgeometrie 15 angeordnet.

In dem Extruderzylinder 11 befindet sich dabei nur eine Extrusionsschnecke 12, sodass das in der Figur 1 gezeigte Aggregat auch als Einschneckenextruder bezeichnet werden kann.

Auf der linken Seite der Extrusionseinrichtung 10 befindet sich eine Materialzuführung 16, mit der ein granulatartiges Material der Extrusionsschnecke 12 zugeführt wird. Hierfür weist die Materialzuführung 16 einen Vorratsbehälter 17 auf, der in einen Zuführtrichter 18 mündet. Der Zuführtrichter 18 leitet das Granulat zu einer Zuführschnecke 19, mit der das Granulat in eine Einzugszone 20 befördert wird. In dieser Einzugszone 20 wird das granulatartige Material Extrusionsschnecke 12 zugeführt, dort erwärmt und somit aufgeschmolzen, sodass die dann vorliegende Schmelze in der Extrusionsschnecke 12 weiter gefördert werden kann. Der Antrieb der Zuführschnecke 19 erfolgt über eine Zuführschneckenmotor 21, der mit der Zuführschnecke 19 entsprechend in Wirkverbindung steht.

Es ist des Weiteren eine Steuereinheit 30 vorgesehen, die zur Ansteuerung des Motors 14 entsprechend mit diesen in Verbindung steht. Die Verbindung kann dabei kabelgebunden oder kabellos erfolgen. Die Steuereinheit 30 ist dabei so ausgebildet, dass sie den Motor 14 derart ansteuert, dass dieser eine Drehung der Extrusionsschnecke 12 erzeugt, die den gewünschten Materialaustrag an der Austragsdüse 13 realisiert.

Hierzu weist die Steuereinheit 30 einer Recheneinheit 31 auf, mit der die Ansteuerung des Motors 14 berechnet und ermittelt wird. Die Steuereinheit 30 weist darüber hinaus eine lokale Austragscharakteristik 32, eine globale Austragscharakteristik 33 sowie eine dynamische Austragscharakteristik 34 auf.

Die lokale Austragscharakteristik 32 definiert ein Austragsvolumen des druckfähigen Materials in Abhängigkeit von einem Drehwinkel der Extrusionsschnecke 12 und/oder einem Vielfachen davon und in Abhängigkeit von der Umdrehungsgeschwindigkeit der Extrusionsschnecke 12.

Die globale Austragscharakteristik 33 definiert ein Austragsvolumen des druckfähigen Materials unabhängig von einem Drehwinkel und nur in Abhängigkeit von der Umdrehungsgeschwindigkeit der Extrusionsschnecke 12.

Die dynamische Austragscharakteristik 34 definiert ein Austragsvolumen des druckfähigen Materials in Abhängigkeit von einer Drehwinkeländerung der Extrusionsschnecke 12 und somit in Abhängigkeit von der Änderung der Umdrehungsgeschwindigkeit.

Die drei Austragscharakteristiken 32 - 34 werden dabei überlagert und es wird zur Ansteuerung des Motors 14 gegebenenfalls eine Änderung der Umdrehungsgeschwindigkeit errechnet, um so Schwankungen im Materialaustrag zu kompensieren.

Die Extrusionseinrichtung weist darüber hinaus einen Drucksensor 22 auf, der mit der Steuereinheit 30 kommunikativ in Verbindung steht. Der Drucksensor 22 erfasst dabei eine Druckinformation an der Austragsdüse 13 und leitet diese Druckinformation an die Steuereinheit 30 weiter. Zusätzlich zu der Vorsteuerung basierend auf den Austragscharakteristiken wird die Drehung der Extrusionsschnecke 12 dabei auch in Abhängigkeit der erfassten Druckinformation eingestellt. Die Regelung kann dabei mittels eines P-Reglers oder eines PI-Reglers erfolgen.

Zur Charakterisierung des Austragsverhaltens und zur Erstellung der Austragscharakteristik eignet sich beispielsweise ein flaches Förderband mit einstellbarer Fördergeschwindigkeit sowie einstellbarem Abstand zwischen Extruderdüse und Förderbandoberfläche. Der effektive Volumenaustrag kann beispielsweise über einen Laserliniensensor erfasst werden, so dass zusätzlich auch die Informationen über die Stranghöhe und Strangbreite aufgezeichnet werden können.

Soll das Extrusionsaggregat für den 3D-Druck eines Bauteils genutzt werden, wird häufig ein G-Code erstellt. Dieser G-Code enthält die Informationen zu welchem Zeitpunkt der Extruder eine definierte Wegstrecke mit einer definierten Geschwindigkeit im Raum zurücklegen soll. Ebenfalls wird bei der Pfadplanung häufig für diese Wegstrecke definiert, welche Strangbreite und Stranghöhe an welcher Stelle extrudiert werden soll, um die finale Bauteilgeometrie zu erhalten. Somit ist auch die Information enthalten, wie viel Volumen an Material vom Extruder auf dieser definierten Wegstrecke ausgetragen werden muss. Diese Information muss von der Steuerung geeignet verarbeitet werden, um die Extrusionsschnecke derart anzusteuern, dass diese definierte Materialmenge ausgestoßen wird. Hierzu bedarf es des Wissens über das Austragsverhalten des Extruders, welches über die Austragscharakteristik definiert wird.

Basierend auf dem G-Code ist es ebenfalls möglich, relevante Prozessfenster zu identifizieren. Beispielhaft seien hier Parameterbereiche der voraussichtlichen Druckgeschwindigkeiten mit zugehörigen Strangbreiten und -höhen genannt. Hieraus kann eine geeignete endliche Anzahl an Stützpunkten definiert werden, die mittels der Austragscharakterisierung erfasst werden müssen, um das Extrusionsaggregat ansteuern zu können. Beispielsweise ist ein Stützpunkt beschrieben durch eine definierte konstante Schneckendrehzahl, eine definierte Druckgeschwindigkeit, welche mit der Bandabzugsgeschwindigkeit korreliert sowie eine definierte Schichthöhe, also dem Abstand zwischen Druckdüse und Bandoberfläche. Wird nun für ein signifikantes Zeitintervall, beispielsweise 10 volle Schneckenumdrehungen á 360°, für diesen Stützpunkt das Austragsverhalten charakterisiert, liegen zeitsynchrone Informationen über die Zusammenhänge von Schneckendrehzahl, Schneckendrehwinkel, Schneckendrehmoment, Schmelzedruck, Strangbreite, Stranghöhe und Strangquerschnitt in Abhängigkeit der relevanten Prozessparameter (Schichtabstand, Befüllungsart des Extruders, Material, ...) vor. Über eine ausreichende Anzahl von Stützpunkten kann das charakteristische globale Austragsverhalten des Extruders in Abhängigkeit der definierten Prozessparameter erfasst und anschließend beispielsweise mathematisch interpoliert werden. Somit steht nachfolgend eine Kompensationstabelle und/oder ein mathematisches Modell, bspw. eine polynominale Beschreibung des Volumenausstoßes in Abhängigkeit der Schneckendrehzahl, für die Ansteuerung des Extruders mittels der CNC-Steuerung zur Verfügung.

Diese Art der Charakterisierung bei konstanten Schneckendrehzahl basiert dabei auf der Annahme eines eingefahrenen Prozessfensters, also z.B. nach dem Anfahren des Extruders und Veränderung der Schneckendrehzahl bei einem ausreichend langen Verweilens in dem Prozessfenster. Während eines Druckprozesses kommt es jedoch häufiger vor, dass nicht mit einer konstanten Druckgeschwindigkeit gedruckt wird, sondern diese sich zeitlich ändert. Beispielsweise wenn eine Roboterkinematik eine scharfe 180° Kurve abfahren soll und es zu Geschwindigkeitseinbrüchen kommt, da die Kinematikachsen ihre Belastungsgrenze erreichen. Da die globale Austragscharakterisierung einen "eingeschwungenen" Prozesszustand voraussetzt, kann diese Charakterisierung nur näherungsweise und bei kleinen Geschwindigkeitsänderungen hinreichend genau das Austragsverhalten beschreiben und für die Ansteuerung genutzt werden. Daher sollten zusätzlich relevante Prozessfenster der Geschwindigkeitsänderung der Schneckendrehzahl und/oder Abzugsgeschwindigkeit charakterisiert und mathematisch oder als Kompensationstabelle modelliert werden.

Bei einer Absenkung der Schneckendrehzahl wird sich der Volumenaustrag beispielsweise veränderlich über die Zeit verringern und damit auch die Strangbreite, bis erneut ein eingeschwungener Zustand erreicht wird. Bei einer Erhöhung der Schneckendrehzahl findet eine entsprechende Zunahme des Volumenstroms statt. Diese Volumenstromänderung ist dabei von dem Prozessfenster abhängig, also insbesondere der Start- und Enddrehzahl, der Geschwindigkeitsänderung (Schneckenbeschleunigung), dem Schmelzedruck sowie durch den u.a. von der Substratgeometrie (Schichthöhe, Extrudieren zwischen zwei Stränge oder auf Ebene oder auf gekrümmte Ebene) beeinflussten Gegendruck, und weiteren Prozesskenngrößen wie Temperatur oder Material. Analog zur Beschreibung des globalen Austragsverhaltens gilt es auch hier anhand der zu erwartenden Prozessfenster eine geeignete Anzahl an Stützstellen zu vermessen. In der CNC-Steuerung können diese wiederum als mathematisches Modell interpoliert oder Kompensationstabelle verarbeitet werden, so dass bei einer bekannten zu erwartenden Änderung der Druckgeschwindigkeit die Geschwindigkeitsänderung und/oder Schneckendrehzahl geeignet nachgeführt werden, um die geforderte Stranggeometrie zu erreichen.

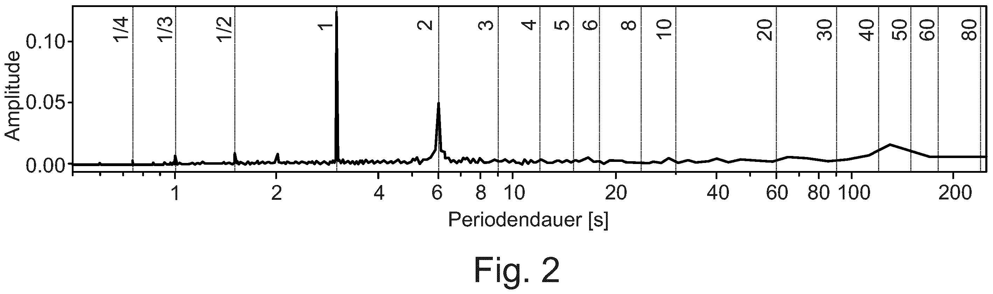

Wird ein verhältnismäßig kurzes Zeitintervall, beispielsweise eine einzelne Schneckenumdrehung von 0-360°, betrachtet, zeigen sich lokale Veränderungen im Austragsverhalten des Extrusionsaggregates. In dieser Charakteristik finden sich auch periodisch wiederkehrende Änderungen im Austragsverhalten, wobei die absoluten Amplituden teilweise variieren können. Dem überlagert finden zudem eher dem globalen Austragsverhalten zuzuordnende Änderungen im Austragsverhalten statt. Insbesondere für die periodisch wiederkehrenden Änderungen bietet es sich an, eine Vorsteuerung des Extrusionsaggregates einzurichten, so dass diese kompensiert werden können. Hierfür können dieselben Messdaten wie für die globale Austragscharakterisierung sowie die Charakterisierung bei Schneckendrehzahländerungen verwendet werden. Insbesondere in Abhängigkeit des Schneckendrehwinkels wird in einer vorteilhaften Ausführung somit bewusst die Extruderschnecke schneller oder langsamer gedreht und dies der globalen Ansteuerung überlagert, um periodisch bekannte Einbrüche oder Zunahmen im Austragsverhalten zu kompensieren. Die notwendige Größe der Kompensation ist dabei von dem Prozessfenster abhängig, also insbesondere der Geschwindigkeitsänderung (Schneckenbeschleunigung), dem Schmelzedruck sowie durch den u.a. von der Substratgeometrie (Schichthöhe, Extrudieren zwischen zwei Stränge oder auf Ebene oder auf gekrümmte Ebene) beeinflussten Gegendruck, und weiteren Prozesskenngrößen wie Temperatur oder Material. Periodisch wiederkehrende Änderungen können hierbei auch bei n-Vielfachen der Basisfrequenz bezogen auf die Schneckendrehzahl auftreten, müssen also nicht zwangsläufig alle 0-360° vorhanden sein. Ebenfalls treten die Amplitudenvariationen der Pulsationen teilweise zyklisch bei höher- und/oder niederharmonischen n- bzw. 1/n-Vielfachen auf. Dies kann dadurch berücksichtigt werden, dass die Regelparameter während des Betriebs des Extrusionsaggregates basierend auf den Drucksensordaten adaptiert werden können. Figur 2 zeigt hierzu Amplituden bei n-fachen der Drehfrequenz bzw. 1/n-fachen Drehfrequenz.

Um diese Charakterisierungen nun im 3D-Druckprozess zur Kompensation zu nutzen, so dass ein gleichmäßigeres Austragsverhalten erreicht wird, werden diese in der CNC-Steuerung berücksichtigt. Je nach Prozessfenster und Extrusionsaggregat sind dabei nicht zwingend alle Mechanismen gleichzeitig erforderlich, um eine hinreichende Regelgüte zu erreichen. Mindestens einmal für jedes relevante Prozessfenster sollten das globale, lokale und dynamische Austragsverhalten charakterisiert werden. Vorteilhaft kann es zudem sein, vor jedem 3D-Druckprozess die Charakterisierung vollständig oder mindestens in Teilen zu wiederholen, um sicherzustellen, dass das Austragsverhalten hinreichend genau bekannt ist. Aus diesen Charakteristiken können nun mathematisch interpolierte Modelle und/oder Kompensationstabellen abgeleitet werden, die auf die Regelparameter der CNC-Steuerung wirken. Eine vorteilhafte Art der Ansteuerung der Extruderschnecke während eines Druckprozesses bildet entweder die Vorgabe von Schneckendrehgeschwindigkeiten und/oder Schneckenpositionen als SollWerte. Bei einer CNC-Steuerung bestehen für Motoren häufig drei prinzipielle Regelkreise. Der Lageregelkreis für die Positionen, welcher i.d.R. im Interpolationstakt (2.8. ein fester Wert von 2-8 ms) arbeitet, sowie der Drehzahl- und Stromregelkreis, welche i.d.R. im Servointerpolationstakt (2.8. ein fester Wert von 22,5 - 125 Mikrosekunden) arbeitet. Diese Regelkreise wirken aufeinander, beispielsweise kaskadiert, so dass ein Regelsystem entsteht. In dieses Regelsystem können zusätzliche Elemente wie n-dimensionale Filter oder weitere Regelkreise mit Proportional-, Integral- sowie Differentialanteilen eingefügt werden, um z.B. eine Vorsteuerung des Schneckendrehmomentes und/oder basierend auf Drucksensorsignalen zu erzielen. Während eines 3D-Druckprozesses werden basierend auf dem G-Code in jedem Interpolationstakt Steuergrößen für die Motoren berechnet. Hierbei wird auch berechnet, wie viel Material von dem Extrusionsaggregat in dem nächsten Interpolationstakt ausgetragen werden muss. Dieser Zielwert muss nun für die Regelgrößen, die auf die Ansteuerung der Extruderschnecke wirken, übersetzt werden. Nachfolgend soll dies anhand einer positionsgesteuerten Schnecke veranschaulicht werden.

Das globale Austragsverhalten kann anhand der signifikanten Anzahl an Stützstellen mit einer Polynomfunktion n-ten Grades, vorzugsweise 3. Grades, beschrieben werden. So gelingt es beispielsweise den gemittelten Materialaustrag in mm³/s in Abhängigkeit einer konstanten Schneckendrehzahl für einen eingeschwungenen Zustand zu beschreiben. Da die Steuergrößen in jedem Interpolationstakt berechnet werden, also z.B. alle 8 ms, kann diese Beschreibung überführt werden in eine Darstellung, die den notwendig zurückzulegenden Drehwinkel je Interpolationstakt in Abhängigkeit der resultierenden ausgetragenen Materialmenge je Interpolationstakt beschreibt. Dieses Wissen kann im 3D-Druckprozess genutzt werden, um für jeden Interpolationstakt festzulegen, um wie viel Grad die Extruderschnecke weitergedreht werden muss, so dass die geforderte Menge an Material ausgestoßen wird. Wie bereits beschrieben funktioniert diese Art der Ansteuerung nur für einen eingeschwungenen Zustand, also mindestens das Vorliegen einer konstanten Schneckendrehzahl bei einer konstanten Druckgeschwindigkeit über einen längeren Zeitraum. Geschwindigkeitsänderungen sowie das lokale, also in kurzen Zeitintervallen ggf. periodisch variierende, bleiben unberücksichtigt.

Um auch bei Geschwindigkeitsänderungen eine sehr gute Regelgüte zu erreichen, muss die Charakterisierung für veränderliche Schneckendrehzahlen in das Regelsystem einbezogen werden. Ist beispielsweise bekannt, dass die Druckgeschwindigkeit von 150 mm/s auf 30 mm/s aufgrund der Dynamikgrenzen der Kinematik abgesenkt werden wird, um eine scharfe 180° Kurve fahren zu können, bedeutet dies, dass auch die Extruderschnecke nicht weiter mit einer konstanten Drehzahl betrieben werden kann. Basierend auf einer geforderten Strangbreite sowie Stranghöhe ergeben sich aus der jeweiligen Druckgeschwindigkeit zu erreichende Austragsraten in mm³/s. Würde einfach der Stützpunkt aus dem globalen Austragsverhalten für 150 mm/s oder 30 mm/s genutzt werden, käme es zu einer Über- oder Unterextrusion. Es wird also zu viel oder zu wenig Material ausgestoßen, während die Kinematik abbremst und der Extruder wieder einen eingeschwungenen Zustand erreicht. Die dynamische Austragscharakterisierung bei Geschwindigkeitsänderungen erlaubt es nun anhand des charakterisierten Prozessfensters (Absenkung Austragsrate, Start- und Endpunkt, Schmelzedruck, Gegendruck, Material, Temperatur, ...) das Austragsverhalten geeignet für die Geschwindigkeitsänderung nachzuführen. Dabei müssen die Dynamikgrenzen von Kinematik und Austragsverhalten berücksichtigt werden, so dass es vorteilhaft sein kann, auf die Druckgeschwindigkeitsänderung und/oder Extruderschneckenansteuerung einzuwirken. Bei einem Abbremsen wie beschrieben kann beispielsweise die effektive Extruderdrehzahl über Schneckenpositionsänderungen je Interpolationstakt anhand einer Polynomfunktion ermittelt aus der Austragsratencharakterisierung in Abhängigkeit der Druckgeschwindigkeitsänderung je Interpolationstakt abgesenkt werden. Ist bekannt, dass die Austragsratenänderung nicht die Dynamik der Druckgeschwindigkeitsänderung erreicht, muss die Druckgeschwindigkeitsänderung zusätzlich in der CNC-Steuerung verlangsamt werden.

Aus der Charakterisierung des lokalen Austragsverhaltens können mathematische Modelle abgeleitet werden, die die periodisch auftretenden Änderungen in Abhängigkeit des Schneckendrehwinkels und/oder n-fachen der Schneckendrehfrequenz beschreiben. Diese mathematischen Modelle können nun im Interpolationstakt direkt oder über n-dimensionalen Kompensationstabellen auf die Ansteuerung der Extruderschnecke in der CNC-Steuerung einwirken. Ist beispielsweise bekannt, dass zwischen der Schneckenposition von 20° bis 110° ein sinusförmiger Peak in der Austragsrate auftritt, kann der ursprünglich vorgesehenen Schneckenpositionsänderung im Interpolationstakt ein Korrekturwert überlagert werden, der die Positionsänderung verlangsamt, so dass der Austragspeak abgedämpft wird. Dabei sollte das Wissen aus der geschwindigkeitsveränderlichen Austragscharakterisierung einbezogen werden, um stabile Regelparameter zu identifizieren. Die Extruderschnecke würde also auch in einem eingeschwungenen Zustand bei konstanter Druckgeschwindigkeit nicht mit einer konstanten Schneckendrehzahl sondern einer veränderlichen Schneckendrehzahl bewusst angesteuert, um auftretende Austragsvariationen zu bekämpfen.

Die dargestellten Kompensationsmechanismen bilden eine Vorsteuerung und basieren auf der vorherigen Charakterisierung des Austragsverhaltens unter relevanten Prozessrandbedingungen. Durch den installierten Drucksensor während des Druckprozesses kann es vorteilhaft sein, neben der Vorsteuerung auch eine zusätzliche Regelung verbleibender Abweichungen im Austragsverhalten zu verwenden. Da das Drucksensorsignal mit dem Volumenaustrag korreliert, können basierend auf Drucksignaländerungen Regelparameter abgeleitet werden, die auf die Schneckenansteuerung im Interpolationstakt zusätzlich wirken. Das Regelsystem besteht somit aus einer Vorsteuerung (global, lokal, geschwindigkeitsveränderlich) und einer Feedbackregelung. Je nach Prozessfenster kann es vorteilhaft sein, die Regelkomponenten unterschiedlich zu gewichten und/oder nur die Vorsteuerung bzw. Feedback-Regelung zu nutzen. Auf Grundlage der globalen Austragscharakterisierung kann eine mathematische Beziehung von mittlerem Schmelzedruck zu ausgetragener Materialmenge hergestellt werden. Somit ist es in der CNC-Steuerung in einer einfachen Ausführung möglich, einen Soll-Schmelzedruck vorzugeben und über einen P-Regler die Schneckenposition im Interpolationstakt entsprechend zu regeln. Das Regelmodell könnte ebenfalls um I- und D-Glieder ergänzt werden. In einer anderen vorteilhaften Ausführung würden die Vorsteuerungen (global und/oder lokal und/oder geschwindigkeitsveränderlich) genutzt und verbleibende Variationen im Austragsverhalten über den Schmelzedruck erfasst und mittels eines P-Reglers der Steuerung der Schneckenposition im Interpolationstakt überlagert. Eine weitere vorteilhafte Ausführung sieht zusätzlich vor, die mathematischen Modelle für die Vorsteuerungen basierend auf den erfassten Drucksensordaten während des Druckprozesses adaptieren zu können.

Neben der In-line-Adaptierung der Vorsteuerungsparameter besteht zudem die Möglichkeit, signifikante Abweichungen im Austragsverhalten direkt zu detektieren und den Druckprozess zu unterbrechen, so dass zunächst eine Rekalibrierung durchgeführt werden kann.

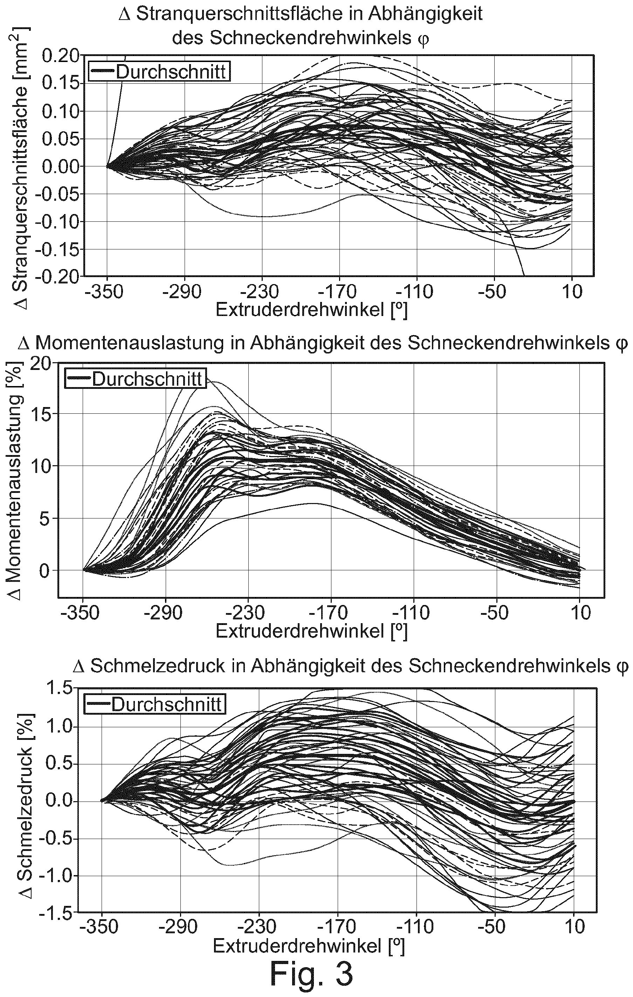

Figur 3 zeigt die Verläufe von Druck, Moment, Austragsfläche über dem Schneckendrehwinkel zur Darstellung des lokalen Austragsverhaltens. Es ist ersichtlich, dass eine charakteristische Variation über dem Schneckendrehwinkel auftritt. Die Amplituden ändern sich jedoch von Schneckenumdrehung zu Schneckenumdrehung, so dass ein adaptiver Regler zur Vorsteuerung günstig ist. Ebenfalls müsste bei einer Vorsteuerung die Reaktionszeit des Schmelzedrucks bei Geschwindigkeitsänderungen Berücksichtigung finden.

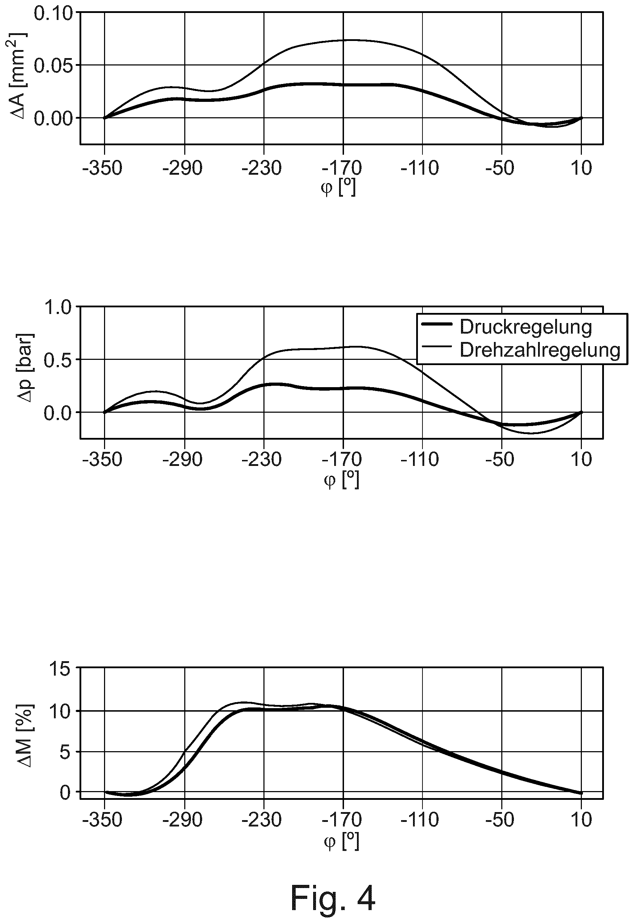

Figur 4 zeigt sehr deutlich die Unterschiede zwischen einer reinen drehzahlkonstanten Schnecke und einer Schnecke mit Drehzahlvorsteuerung und überlagerter P-Regelung für den Schmelzedruck. Das charakteristische lokale Verhalten über dem Schneckendrehwinkel wird kaum verändert, jedoch die Variationen hinsichtlich Ihrer Amplitude deutlich gedämpft. Hierdurch wird ein um bis zu 40% verbessertes Austragsverhalten erzielt. Dieser reinen P-Regelung überlagert könnte nun noch eine Vorsteuerung der Extruderschnecke in Abhängigkeit der Schneckenposition stattfinden, um das Austragsverhalten weiter zu verbessern.

### Bezugszeichenliste

10 Extrusionseinrichtung
11 Extruderzylinder
12 Extrusionsschnecke
13 Austragsdüse
14 Motor
15 Anbindungsgeometrie
16 Materialzuführung
17 Vorratsbehälter
18 Zuführtrichter
19 Zuführschnecke
20 Einzugszone
21 Zuführschneckenmotor
22 Drucksensor
30 Steuereinheit
31 Recheneinheit
32 lokale Austragscharakteristik
33 globale Austragscharakteristik
34 dynamische Austragscharakteristik

## Patentansprüche

1. Extrusionseinrichtung (10) zum Herstellen von dreidimensionalen Strukturen aus mindestens einem druckfähigen Material mit einer Extrusionsschnecke (12) zum Fördern des mindestens einen druckfähigen Materials von einer Materialzuführung (16) hin zu einer Austragsdüse (13) zum Ausgeben des mindestens einen druckfähigen Materials, einem Motor (14) zum drehbaren Antreiben der Extrusionsschnecke (12) sowie einer Steuereinheit (30), die zum Steuern der Drehung der Extrusionsschnecke (12) durch Ansteuerung des Motors (14) eingerichtet ist, **dadurch gekennzeichnet, dass** die Steuereinheit (30) eine lokale Austragscharakteristik (32) enthält, die ein Austragsvolumen des druckfähigen Materials aus der Austragsdüse (13) in Abhängigkeit von einem Drehwinkel der Extrusionsschnecke (12) und/oder einem Vielfachen davon definiert, wobei die Extrusionseinrichtung (10) einen Drehgeber zum Erfassen einer Drehwinkelinformation der Extrusionsschnecke (12) hat und die Steuereinheit (30) ferner eingerichtet ist, den gewünschten Materialaustrag aus der Austragsdüse (13) durch Ansteuerung des Motors (14) zur Steuerung der Drehung der Extrusionsschnecke (12) in Abhängigkeit von dem aus der lokalen Austragscharakteristik (32) für die erfasste Drehwinkelinformation definierten Austragsvolumen einzustellen.

2. Extrusionseinrichtung (10) nach Anspruch 1, **dadurch gekennzeichnet, dass** die Steuereinheit (30) eine globale Austragscharakteristik (33) enthält, die ein Austragsvolumen des druckfähigen Materials aus der Austragsdüse (13) unabhängig von dem Drehwinkel der Extrusionsschnecke (12) gemittelt über einen gewissen Austragszeitraum definiert, wobei die Steuereinheit (30) ferner eingerichtet ist, den gewünschten Materialaustrag aus der Austragsdüse (13) durch Ansteuerung des Motors (14) zur Steuerung der Drehung der Extrusionsschnecke (12) zusätzlich auch in Abhängigkeit von der globalen Austragndüse (13) einzustellen.

3. Extrusionseinrichtung (10) nach Anspruch 1 oder 2, **dadurch gekennzeichnet, dass** die Steuereinheit (30) eine dynamische Austragscharakteristik (34) enhält, die ein Austragsvolumen des druckfähigen Materials aus derAustragndüse (13) in Abhängigkeit von einer Drehbeschleunigung der Extrusionsschnecke (12) definiert, wobei die Steuereinheit (30) ferner eingerichtet ist, den gewünschten Materialaustrag aus der Austragsdüse (13) durch Ansteuerung des Motors (14) zur Steuerung der Drehung der Extrusionsschnecke (12) zusätzlich auch in Abhängigkeit von der dynamischen Austragscharakteristik (34) einzustellen.

4. Extrusionseinrichtung (10) nach einem der vorhergehenden Ansprüche, **dadurch gekennzeichnet, dass** die jeweilige Austragscharakteristik (32, 33, 34) das entsprechende Austragsvolumen mittels einer polynominalen und/oder tabellarischen Beschreibung definiert.

5. Extrusionseinrichtung (10) nach einem der vorhergehenden Ansprüche, **dadurch gekennzeichnet, dass** ein Drucksensor (22) zum Erfassen einer Materialdruckinformation nach der Extrusionsschnecke (12) angeordnet und mit der Steuereinheit (30) verbunden ist, wobei die Steuereinheit (30) weiterhin eingerichtet ist, den gewünschten Materialaustrag aus der Austragsdüse (13) durch Ansteuerung des Motors (14) zur Steuerung der Drehung der Extrusionsschnecke (12) zusätzlich auch in Abhängigkeit von der erfassten Materialdruckinformation einzustellen.

6. Extrusionseinrichtung (10) nach Anspruch 5, **dadurch gekennzeichnet, dass** die Steuereinheit (30) zur Steuerung der Drehung in Abhängigkeit von der erfassten Materialdruckinformation mittels eines P-Reglers, eines PI-Reglers oder eines Reglers mit adaptiven Filtergewichten höherer Ordnung eingerichtet ist.

7. Verfahren zum Herstellen einer dreidimensionalen Struktur aus mindestens einem druckfähigen Material mittels einer Extrusionseinrichtung (10), wobei das Verfahren die folgenden Schritte umfasst:
- Ansteuern eines Motors (14) zur Steuerung der Drehung einer Extrusionsschnecke (12) der Extrusionseinrichtung (10), um das druckfähige Material von einer Materialzuführung (16) hin zu einer Austragsdüse (13) zum Ausgeben des druckfähigen Materials zu fördern;
**gekennzeichnet durch**
- Bereitstellen einer lokalen Austragscharakteristik (32), die ein Austragsvolumen des druckfähigen Materials aus der Austragsdüse (13) in Abhängigkeit von einem Drehwinkel der Extrusionsschnecke (12) und/oder einem Vielfachen davon definiert,
- Erfassen einer Drehwinkelinformation der Extrusionsschnecke (12) mittels eines Drehgebers, und
- Einstellen des gewünschten Materialaustrags aus der Austragsdüse (13) durch Ansteuerung des Motors (14) zur Steuerung der Drehung der Extrusionsschnecke (12) in Abhängigkeit von dem aus der lokalen Austragscharakteristik (32) für die erfasste Drehwinkelinformation definierten Austragsvolumen mittels der Steuereinheit (30).

8. Verfahren nach Anspruch 7, **dadurch gekennzeichnet, dass** eine globale Austragscharakteristik (33) bereitgestellt wird, die ein Austragsvolumen des druckfähigen Materials aus der Austragsdüse (13) unabhängig von dem Drehwinkel der Extrusionsschnecke (12) gemittelt über einen gewissen Austragszeitraum definiert, wobei der gewünschte Materialaustrag aus der Austragsdüse (13) durch Ansteuerung des Motors (14) zur Steuerung der Drehung der Extrusionsschnecke (12) zusätzlich auch in Abhängigkeit von der globalen Austragscharakteristik (33) mittels der Steuereinheit (30) eingestellt wird.

9. Verfahren nach Anspruch 7 oder 8, **dadurch gekennzeichnet, dass** eine dynamische Austragscharakteristik (34) bereitgestellt wird, die ein Austragsvolumen des druckfähigen Materials aus der Austragsdüse (13) in Abhängigkeit von einer Drehbeschleunigung der Extrusionsschnecke (12) definiert, wobei der gewünschte Materialaustrag aus der Austragsdüse (13) durch Ansteuerung des Motors (14) zur Steuerung der Drehung der Extrusionsschnecke (12) zusätzlich auch in Abhängigkeit von der dynamischen Austragscharakteristik (34) eingestellt wird.

10. Verfahren nach einem der Ansprüche 7 bis 9, **dadurch gekennzeichnet, dass** die jeweilige Austragscharakteristik (32, 33, 34) derart bereitgestellt wird, dass die die jeweilige Austragscharakteristik (32, 33, 34) das entsprechende Austragsvolumen mittels einer polynominalen und/oder tabellarischen Beschreibung definiert.

11. Verfahren nach einem der Ansprüche 7 bis 10, **dadurch gekennzeichnet, dass** mittels eines Drucksensors (22) nach der Extrusionsschnecke (12) eine Materialdruckinformation des druckfähigen Materials erfasst wird, wobei der gewünschte Materialaustrag aus der Austragsdüse (13) des Motors (14) zur Steuerung der Drehung der Extrusionsschnecke (12) zusätzlich auch in Abhängigkeit von der erfassten Materialdruckinformation mittels der Steuereinheit (30) eingestellt wird.

12. Verfahren nach Anspruch 11, **dadurch gekennzeichnet, dass** die Steuerung der Drehgeschwindigkeit in Abhängigkeit von der erfassten Materialdruckinformation mittels eines P-Reglers, eines PI-Reglers oder eines Reglers mit adaptiven Filtergewichten höherer Ordnung erfolgt.
